# EUROPEAN PATENT SPECIFICATION

(11) **EP 1 933 671 B1**
(45) Date of publication and mention of the grant of the patent: **30.12.2009**
(21) Application number: 06799749.4
(22) Date of filing: 11.10.2006
(51) Int. Cl.: A47C 17/80, A47C 19/00, B60P 3/38, B62D 33/06

(54) **A BUNK IN A CAB OF A TRUCK**
KOJE IM FAHRERHAUS EINES LKWS
COUCHETTE DANS LA CABINE D'UN CAMION

(30) Priority: 14.10.2005 SE 0502279
(43) Date of publication of application: 25.06.2008
(73) Proprietor: FSP Management AB, 264 21 Klippan (SE)
(72) Inventor: BENGTSSON, Ulf, S-281 48 Hässleholm (SE)
(74) Representative: Petri, Stellan
(86) International application number: PCT/SE2006/001149
(87) International publication number: WO 2007/043947

(56) References cited:
- GB-A- 1 460 567
- NL-C- 36 468
- US-A- 3 698 022
- US-A- 4 430 763
- US-B1- 6 735 797

## Description

### Technical field

The present invention relates to a bunk for a cab in a truck or the like, comprising a profile and a bottom supported thereby.

### Background of the invention

A modern cab for a large truck or the like is normally provided with at least one bunk in a cab space behind the driver's seat. The bunk is meant to allow a second driver to sleep or rest, while a first driver is driving the truck, so that stops during a long journey can be kept at a minimum.

The bunks in use today can seldomly be adapted to a specific demand from the driver. However, there is an increasing demand for changing the width or the length of the bunk depending on the size of the driver, and also for choosing a certain bottom of the bunk to satisfy different persons' requirements of comfort.

The closest prior art is represented by US-A-4 430 763.

### Summary of the invention

An object of the present invention is to eliminate the drawbacks mentioned above, which is achieved by assigning to the device the characteristics according to claim 1.

According to one aspect of the invention, there is provided a bunk for a cab of a truck comprising a profile and a bottom supported thereby. The profile is substantially L-shaped with a base member for supporting the bottom, wherein the base member has tongues, which are arranged in parallel along the base member and are spaced apart by equal intervals. The tongues are provided with punctured holes.

The bottom can be made in different ways. For example the bottom can consist of a net, which can be fastened to the profile by arranging the net over the tongues before bending them about 180° over the base member. In a second embodiment the bottom consists of a board made of wood, plywood or the like that can be fixed to the profile by arranging the board over the tongues and using the punctured holes for fastening the board by fastening means. In a third embodiment the bottom consists of a set of transversal ribs made of wood, metal or plastic that at their ends are fixed to two longitudinal elements, which can be fastened to the profile by arranging the elements over the tongues and using the punctured holes for fastening them by fastening means. In a fourth embodiment the bottom consists of a set of extruded rubber threads or rods having fastening elements made of plastic or metal at their ends, which fastening elements can be fastened to the profile by positioning them over the tongues and using the punctured holes for fastening them by fastening means. Plastic support elements are arranged on the rubber rods for distributing the pressure when the bunk is in use.

The profile is made of steel and comprises several partial profiles joined together by corner elements made of plastic or metal. One partial profile comprises a first portion and a second portion, which are riveted, welded or the like together. The first portion consists of the base member and a side member, which are made in one piece and are arranged perpendicularly to each other forming an L-shape. The second portion is made in one piece and consists of four elements, wherein a first element is arranged perpendicularly to a second element and is parallel to a fourth element, and a third element is arranged perpendicularly to the second element and to the fourth element. The fourth element abuts and is riveted, welded or the like to the side member and the first element abuts the base member, when joining together the first and second portions.

Other objects, features and advantages of the present invention will appear from the following detailed description, from the attached drawings as well as from the dependent claims.

### Brief description of the drawings

In order to explain the invention, a number of embodiments of the invention will be described below with reference to the drawings, in which:
FIG 1 is a schematic, exploded view in perspective of a bunk in a cab of a truck according to the invention,
FIG 2 is a schematic, exploded view in perspective of a partial profile according to the invention,
FIG 3 is a schematic, perspective view of a partial profile having a bottom according to a first embodiment arranged thereto,
FIG 4 is a schematic, perspective view of a partial profile having a bottom according to a second embodiment arranged thereto,
FIG 5 is a schematic, perspective view of a partial profile having a bottom according to a third embodiment arranged thereto, and
FIG 6 is a schematic, perspective view of a partial profile having a bottom according to a fourth embodiment arranged thereto.

Same reference numerals have been used to indicate the same parts in the figures to increase the readability of the description and for the sake of clarity.

### Description of embodiments of the invention

A bunk 10 is to be mounted transversely in a cab of a truck behind the driver's seat. In the bunk 10 a second driver can sleep or rest, so that the truck can be driven with as few stops as possible. It is of great importance during long journeys that this second driver really gets the sleep or rest he needs before changing drivers both for his own safety and for the safety of the other driver or other people driving on the road.

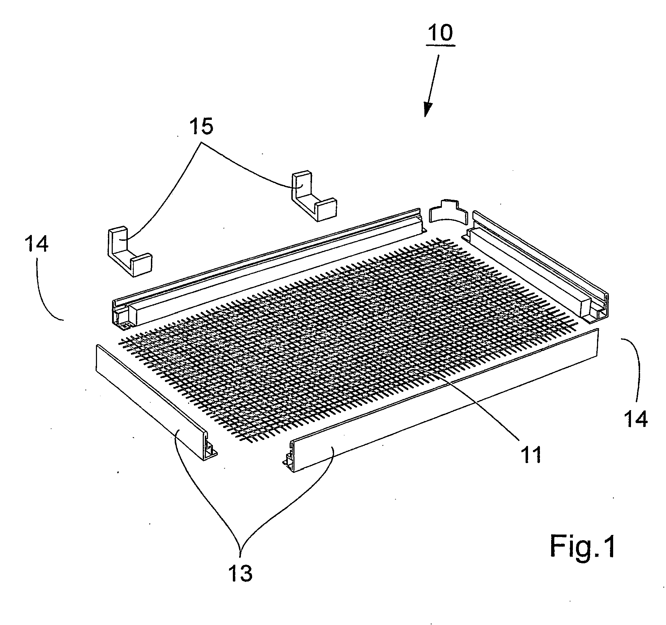

The bunk 10 comprises a profile and a bottom, illustrated as a net 11 in FIG 1. The profile is longitudinal and has a substantially L-shaped cross section with a base member 12 for supporting the bottom. The profile consists of several partial profiles 13, which are joined together by corner elements 14 made of plastic or metal. The profile is made of steel, preferably galvanized steel. The bunk 10 is fastened to a wall in the cab by generally used means 15.

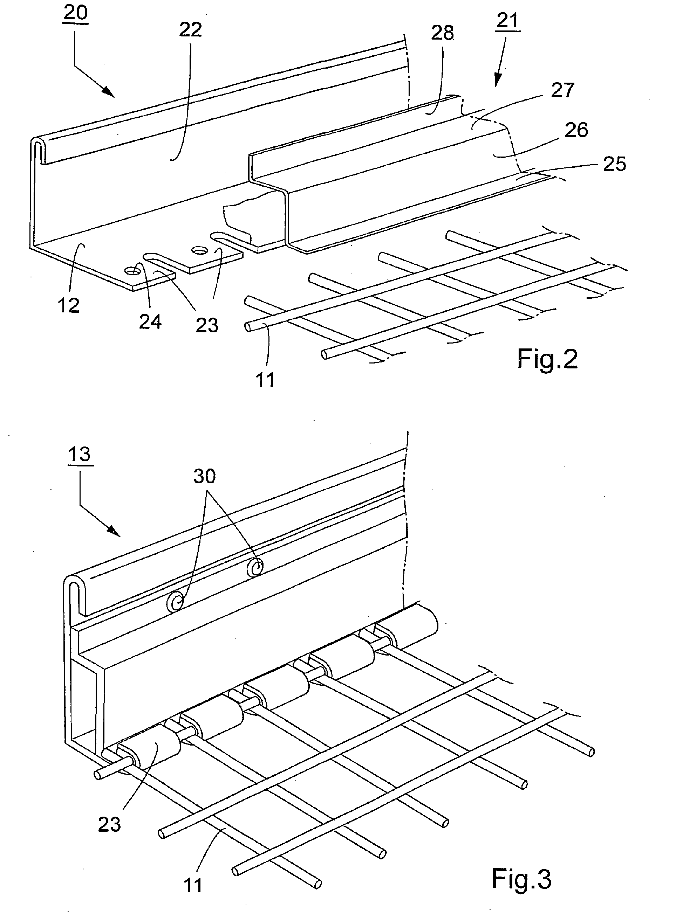

One partial profile 13 consists of a first portion 20 and a second portion 21, as shown in FIG 2. The first portion 20 comprises the base member 12 and a side member 22, which are made in one piece and are arranged perpendicularly to each other forming an L-shape. The base member 12 has tongues 23 that are arranged in parallel along a free end of the base member 12 and are spaced apart by equal intervals. The tongues 23 are provided with punctured holes 24 and are bendable 180° over the base member 12.

The free end of the side member 22 can be bent 180° towards the base member 12 forming a fold-over, as shown in FIG 2.

The second portion 21 is made in one piece and consists of four longitudinal elements. A first element 25 is arranged perpendicularly to a second element 26 and is parallel to a fourth element 28, and a third element 27 is arranged perpendicularly to the second element 26 and to the fourth element 28, as illustrated in FIG 2.

The first portion 20 and the second portion 21 are joined together by riveting, welding or the like to form one partial profile 12. Thus, the fourth element 28 abuts and is riveted or welded to the side member 22 and the first element 25 abuts the base member 12, as shown in FIG 3, rivets 30 being used in this case.

The construction of the profile offers several alternatives regarding type of bottom to be supported thereby. FIG 3 shows a first embodiment of the bunk 10, wherein the bottom consists of a net that is fastened to the profile by arranging the net 11 over the tongues 23 before bending these about 180° over the base member 12.

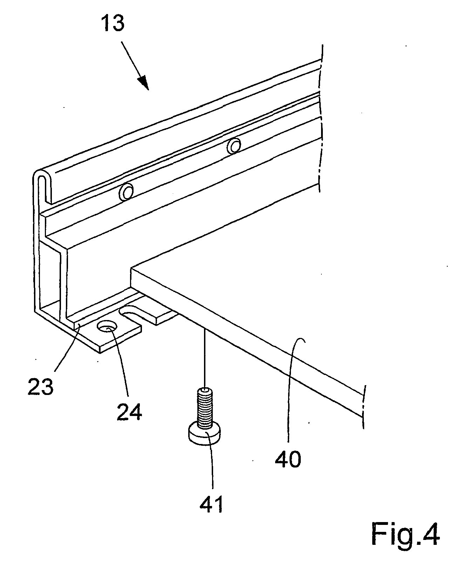

A second embodiment of the bunk 10 is shown in FIG 4, wherein the bottom consists of a board that is positioned over the tongues 23 and the punctured holes 24 are used for fastening the board 40 by fastening means 41. The board is made of plywood, wood or the like. The fastening means are for example screws.

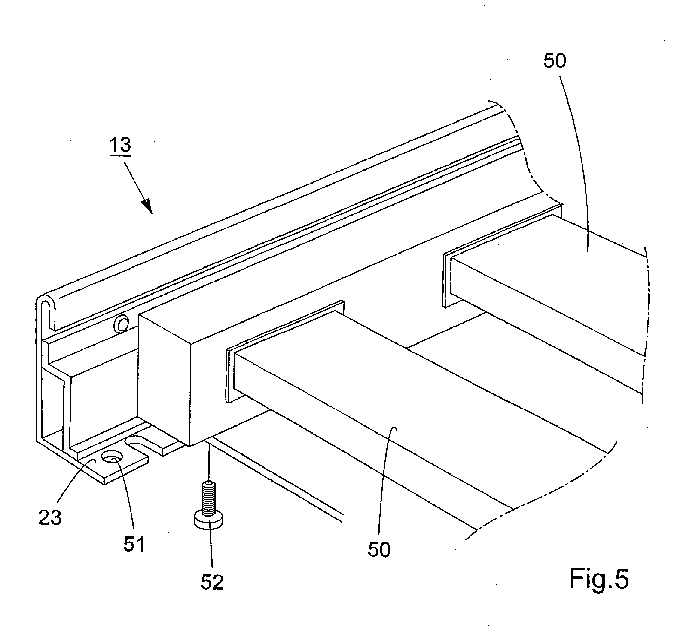

FIG 5 shows a third embodiment of the bunk 10, wherein the bottom consists of a set of transversal ribs 50 that at their opposite ends are fixed to two longitudinal elements 51, respectively, which can be fastened to the profile or the partial profiles 13 by arranging the longitudinal elements 51 over the tongues 23 and using the punctured holes 24 for fastening the elements 51 by fastening means 52, e.g. screws. The ribs 50 are made of wood, metal or plastic.

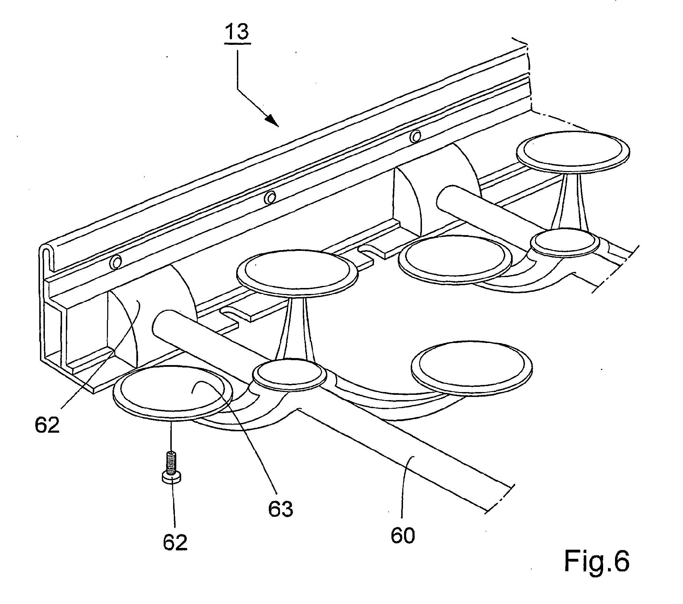

A fourth embodiment of the bunk 10 is shown in FIG 6, wherein the bottom consists of a set of extruded rubber threads or rods 60 having fastening elements 61 at their ends. The fastening elements 61 are positioned over the punctured holes 24 of the tongues 23, and are fastened to the base member 12 and to the profile or the partial profiles 13 by using the holes 23 together with fastening means 62, e.g. screws. To make the bunk 10 more comfortable and to distribute the pressure of a person when the bunk 10 is in use, plastic support elements can be arranged on the rubber threads or rods 60. The fastening elements 61 are made of plastic or metal.

Since the profile comprises several partial profiles 13, which are joined together by corner elements 14, it is very easy to modify the length and the width of the bunk 10 to satisfy demands from different persons. To choose between various types of bottoms makes it possible to tailor made the bunk 10 for changeable comfort. Another advantage is that it is easy to adapt the size of the bunk 10 to the space of the truck cab.

In the claims, the term "comprises/comprising" does not exclude the presence of other elements or steps. Furthermore, although individually listed, a plurality of means, elements or method steps may be implemented. Additionally, although individual features may be included in different embodiments, these may possibly be combined in other ways, and the inclusion in different embodiments does not imply that a combination of features is not feasible. In addition, singular references do not exclude a plurality. The terms "a", "an" does not preclude a plurality. Reference signs in the claims are provided merely as a clarifying example and shall not be construed as limiting the scope of the claims in any way.

## Claims

1. A bunk (10) in a cab of a truck or the like, comprising a profile having several partial profiles (13)and a bottom supported thereby, wherein each partial profile is substantially L-shaped and comprises a lower base member (12) for supporting the bottom, wherein the base member (12) has tongues (23) that are arranged in parallel along the base member (12) and are spaced apart by equal intervals, **characterized in that** each partial profile (13)has a second, longitudinal portion (21),riveted, welded or the like inside the L-shaped partial profile, the second portion being made in one piece having four elements (25, 26, 27, 28), wherein a first element (25) is arranged perpendicularly to a second element (26) and is parallel to a fourth element (28), and a third element (27) is arranged perpendicularly to the second element (26) and to the fourth element (28).

2. A bunk (10) according to claim 1, **characterized in that** the partial profiles (13) are joined together by corner elements (14) made of plastic or metal.

3. A bunk (10) according to claim 1 or 2, **characterized in that** one partial profile (13) comprises a first portion (20) and the second portion (21), wherein the first portion (20) consists of the base member (12) and a side member (22), which are made in one piece and are arranged perpendicularly to each other forming an L-shape.

4. A bunk (10) according to claim 3, **characterized in that** a free end of the side member (22) is bent 180° towards the base member (12) forming a fold-over.

5. A bunk (10) according to any of previous claims, **characterized in that** the fourth element (28) abuts and is riveted, welded or the like to the side member (22) and the first element (25) abuts the base member (12), when joining together the first portion (20) and the second portion (21).

6. A bunk (10) according to claim 1, **characterized in that** the tongues (23) are provided with punctured holes (24).

7. A bunk (10) according to any of previous claims, **characterized in that** the bottom consists of a net (11), which can be fastened to the profile by arranging the net (11) over the tongues (23) before bending them about 180° over the base member (12).

8. A bunk (10) according to any of the claims 1-6, **characterized in that** the bottom consists of a board (40) made of wood, plywood or the like that can be fixed to the profile by arranging the board (40) over the tongues (23) and using the punctured holes (24) for fastening the board (40) by fastening means (41).

9. A bunk (10) according to any of the claims 1-6, **characterized in that** the bottom consists of a set of transversal ribs (50) made of wood, metal or plastic that at their ends are fixed to two longitudinal elements (51), which can be fastened to the profile by arranging the elements (51) over the tongues (23) and using the punctured holes (24) for fastening them by fastening means (52).

10. A bunk (10) according to any of the claims 1-6, **characterized in that** the bottom consists of a set of extruded rubber threads or rods (60) having fastening elements (61) made of plastic or metal at their ends, which fastening elements (61) can be fastened to the profile by positioning them over the tongues (23) and using the punctured holes (24) for fastening them by fastening means (62).

11. A bunk (10) according to claim 10, **characterized in that** plastic support elements (63) are arranged on the rubber rods (60) for distributing the pressure when the bunk (10) is in use.

12. A bunk (10) according to any of previous claims, **characterized in that** the profile is made of steel.

## Patentansprüche

1. Koje (10) in einem Fahrerhaus eines LKWs oder dergleichen, umfassend ein Profil mit mehreren Teilprofilen (13) und einen dadurch gestützten Boden, wobei jedes Teilprofil im Wesentlichen L-förmig ist und ein unteres Basiselement (12) zum Stützen des Bodens umfasst, wobei das Basiselement Zungen (23) besitzt, welche entlang des Basiselements (12) nebeneinander angeordnet und durch gleiche Intervalle beabstandet sind, **dadurch gekennzeichnet, dass** jedes Teilprofil (13) einen zweiten, längsverlaufenden Anteil (21) besitzt, welcher innen in das L-förmige Teilprofil genietet, geschweißt oder dergleichen ist, wobei der zweite Anteil aus einem Stück mit vier Elementen (25, 26, 27, 28) gebildet ist, wobei ein erstes Element (25) senkrecht zu einem zweiten Element (26) angeordnet ist und parallel zu einem vierten Element (28) ist, und wobei ein drittes Element (27) senkrecht zu dem zweiten Element (26) und dem vierten Element (28) angeordnet ist.

2. Koje (10) nach Anspruch 1, **dadurch gekennzeichnet, dass** die Teilprofile (13) mittels aus Kunststoff oder Metall gebildeten Eckelementen zusammengefügt sind.

3. Koje (10) nach Anspruch 1 oder 2, **dadurch gekennzeichnet, dass** ein Teilprofile (13) einen ersten Anteil (20) und den zweiten Anteil (21) umfasst, wobei der erste Anteil (20) aus dem Basiselement (12) und einem Seitenelement (22) besteht, welche aus einem Stück gebildet und senkrecht zueinander, eine L-Form bildend, angeordnet sind.

4. Koje (10) nach Anspruch 3, **dadurch gekennzeichnet, dass** ein freies Ende des Seitenelements (22) eine Umfaltung bildend um 180° in Richtung des Basiselements (12) gebogen ist.

5. Koje (10) nach einem der vorhergehenden Ansprüche, **dadurch gekennzeichnet, dass** beim Zusammenfügen des ersten Anteils (20) mit dem zweiten Anteil (21) das vierte Element (28) an dem Seitenelement (22) anliegt und an das Seitenelement (22) genietet, geschweißt oder dergleichen ist und das erste Element (25) an dem Basiselement (12) anliegt.

6. Koje (10) nach Anspruch 1, **dadurch gekennzeichnet, dass** die Zungen (23) mit durchstochenen Löchern (24) versehen sind.

7. Koje (10) nach einem der vorhergehenden Ansprüche, **dadurch gekennzeichnet, dass** der Boden aus einem Netz (11) besteht, welches an dem Profil befestigt werden kann, indem das Netz (11) über den Zungen (23) angeordnet wird, bevor diese um 180° über das Basiselement (12) gebogen werden.

8. Koje (10) nach einem der Ansprüche 1 bis 6, **dadurch gekennzeichnet, dass** der Boden aus einer Platte (40) aus Holz, Sperrholz oder dergleichen besteht, welche an dem Profil befestigt werden kann, indem die Platte (40) über den Zungen (23) angeordnet wird und die durchstochenen Löcher (24) zum Befestigen der Platte (40) mittels Befestigungseinrichtungen (41) verwendet werden.

9. Koje (10) nach einem der Ansprüche 1 bis 6, **dadurch gekennzeichnet, dass** der Boden aus einer Menge von querverlaufenden Rippen (50) aus Holz, Metall oder Kunststoff besteht, welche an ihren Enden an zwei längsverlaufenden Elementen (51) fixiert sind, welche an dem Profil befestigt werden können, indem die Elemente (51) über den Zungen (23) angeordnet werden und die durchstochenen Löcher (24) zum Befestigen der Elemente mittels Befestigungseinrichtungen (52) verwendet werden.

10. Koje (10) nach einem der Ansprüche 1 bis 6, **dadurch gekennzeichnet, dass** der Boden aus einer Menge von extrudierten Gummisträngen oder -stäben (60) mit Befestigungselementen (61) aus Kunststoff oder Metall an ihren Enden besteht, wobei die Befestigungselemente (61) an dem Profil befestigt werden können, indem sie über den Zungen (23) positioniert werden und die durchstochenen Löcher (24) zum Befestigen der Befestigungselemente mittels Befestigungseinrichtungen (62) verwendet werden.

11. Koje (10) nach Anspruch 10, **dadurch gekennzeichnet, dass** Kunststoffstützelemente (63) auf den Gummistäben (60) angeordnet sind zum Verteilten des Drucks bei Verwendung der Koje (10).

12. Koje (10) nach einem der vorhergehenden Ansprüche, **dadurch gekennzeichnet, dass** das Profil aus Stahl gefertigt ist.

## Revendications

1. Couchette (10) dans la cabine d'un camion ou analogue, comprenant un profilé ayant plusieurs profilés partiels (13) et un fond supporté par ceux-ci, dans laquelle couchette chaque profilé partiel a sensiblement la forme d'un L et comprend un élément de base inférieur (12) destiné à supporter le fond, dans laquelle l'élément de base (12) comporte des languettes (23) qui sont agencées parallèlement le long de l'élément de base (12) et sont équidistantes, **caractérisée en ce que** chaque profilé partiel (13) comporte une deuxième partie, longitudinale (21), rivetée, soudée, ou analogue, à l'intérieur du profilé partiel en forme de L, la deuxième partie étant faite d'une seule pièce, ayant quatre éléments (25, 26, 27, 28), dans laquelle un premier élément (25) est agencé perpendiculairement à un deuxième élément (26) et est parallèle à un quatrième élément (28), et un troisième élément (27) est agencé perpendiculairement au deuxième élément (26) et au quatrième élément (28).

2. Couchette (10) selon la revendication 1,
**caractérisée en ce que** les profilés partiels (13) sont réunis par des éléments d'angle (14) faits de matière plastique ou de métal.

3. Couchette (10) selon la revendication 1 ou 2, **caractérisée en ce qu'**un profilé partiel (13) comprend une première partie (20) et la deuxième partie (21), dans laquelle la première partie (20) consiste en l'élément de base (12) et un élément latéral (22), qui sont faits d'une seule pièce et sont agencés perpendiculairement l'un à l'autre, formant un L.

4. Couchette (10) selon la revendication 3,
**caractérisée en ce qu'**une extrémité libre de l'élément latéral (22) est recourbée à 180° vers l'élément de base (12), formant un rabat.

5. Couchette (10) selon l'une quelconque des revendications précédentes, **caractérisée en ce que** le quatrième élément (28) bute contre, et est riveté, soudé, ou analogue, à, l'élément latéral (22) et le premier élément (25) bute contre l'élément de base (12), lorsque sont réunies la première partie (20) et la deuxième partie (21).

6. Couchette (10) selon la revendication 1,
**caractérisée en ce que** les languettes (23) sont pourvues de trous perforés (24).

7. Couchette (10) selon l'une quelconque des revendications précédentes, **caractérisée en ce que** le fond consiste en un filet (11), qui peut être fixé au profilé en agençant le filet (11) sur les languettes (23) avant de les recourber d'environ 180° sur l'élément de base (12).

8. Couchette (10) selon l'une quelconque des revendications 1 à 6, **caractérisée en ce que** le fond consiste en une planche (40) faite de bois, contreplaqué, ou analogue, qui peut être fixée au profilé en agençant la planche (40) sur les languettes (23) et en utilisant les trous perforés (24) pour fixer la planche (40) par des moyens de fixation (41).

9. Couchette (10) selon l'une quelconque des revendications 1 à 6, **caractérisée en ce que** le fond consiste en un jeu de nervures transversales (50) faites de bois, métal ou de matière plastique qui, à leurs extrémités, sont fixées à deux éléments longitudinaux (51), qui peuvent être fixés au profilé en agençant les éléments (51) sur les languettes (23) et en utilisant les trous perforés (24) pour les fixer par des moyens de fixation (52).

10. Couchette (10) selon l'une quelconque des revendications 1 à 6, **caractérisée en ce que** le fond consiste en un jeu de tiges ou fils de caoutchouc extrudé (60) ayant, à leurs extrémités, des éléments de fixation (61) faits de matière plastique ou métal, lesquels éléments de fixation (61) peuvent être fixés au profilé en étant positionnés sur les languettes (23) et en utilisant les trous perforés (24) pour les fixer par des moyens de fixation (62).

11. Couchette (10) selon la revendication 10, **caractérisée en ce que** des éléments de support en matière plastique (63) sont agencés sur les tiges de caoutchouc (60) pour répartir la pression lorsque la couchette (10) est utilisée.

12. Couchette (10) selon l'une quelconque des revendications précédentes, **caractérisée en ce que** le profilé est fait d'acier.
